# EUROPÄISCHE PATENTSCHRIFT

(11) **EP 3 149 091 B1**
(45) Veröffentlichungstag und Bekanntmachung des Hinweises auf die Patenterteilung: **16.12.2020**
(21) Anmeldenummer: 15725010.1
(22) Anmeldetag: 27.05.2015
(51) Int. Cl.: C09D 5/00

(54) **VERWENDUNG VON METALLPIGMENTEN IN EINER FLÜSSIGEN POLYMERFORMULIERUNG**
USE OF METALLIC PIGMENTS IN A LIQUID POLYMER FORMULATION
UTILISATION DE PIGMENTS MÉTALLIQUES DANS UNE FORMULATION POLYMÈRE LIQUIDE

(30) Priorität: 27.05.2014 DE 102014210138
(43) Veröffentlichungstag der Anmeldung: 05.04.2017
(73) Patentinhaber: Fraunhofer-Gesellschaft zur Förderung der angewandten Forschung e.V., 80686 München (DE)
(72) Erfinder: METZNER, Martin, 74417 Gschwend (DE); WILKE, Yvonne, 28357 Bremen (DE); STENZEL, Volkmar, 27321 Thedinghausen (DE)
(74) Vertreter: Eisenführ Speiser
(86) Internationale Anmeldenummer: PCT/EP2015/061624
(87) Internationale Veröffentlichungsnummer: WO 2015/181190

(56) Entgegenhaltungen:
- EP-A1- 1 659 156
- EP-A1- 1 953 195
- EP-A1- 2 436 738
- WO-A1-2013/056847
- WO-A1-2014/022004

## Beschreibung

Die Erfindung betrifft die Verwendung von beschichteten Metallpigmenten in einer flüssigen Polymerformulierung zur Verbesserung der Galvanisierbarkeit der Oberfläche der Polymerformulierung nach ihrer Aushärtung. Sie betrifft ferner eine flüssige Polymerformulierung, umfassend die erfindungsgemäß zu verwendenden Metallpigmente, ein Verfahren zur Galvanisierung einer Polymeroberfläche und galvanisierte Gegenstände, die über ein erfindungsgemäßes Verfahren hergestellt wurden bzw. die die erfindungsgemäß zu verwendenden Metallpigmente in einer Polymerschicht unterhalb der Galvanisierungsschicht umfassen.

Verwendungen von Metallpigmenten sind z.B. in den Patentpublikationen WO 2014/022004 A1 und WO 2013/056847 A1 beschrieben. Zwar betreffen diese Patentpublikationen filmbildende Zusammensetzungen bzw. Formulierungen, die Oxidbeschichtete Metallpigmente enthalten, jedoch dienen diese zum Korrosionsschutz von Metallsubstraten und nicht der Galvanik. Die Oberflächenbeschichtung der Metallpigmente geschieht vielmehr zur Verbesserung der Lagerstabilität und Feuchtigkeitsresistenz in Wasser-basierten Farben und den sich ergebenden Beschichtungsfilmen. Weiterhin beschreiben z.B. auch die Patentpublikationen EP 2436738 A1 und EP 1953195 A1 eine Oberflächenbeschichtung von Metallpigmenten zur Verbesserung der Lagerstabilität und Feuchtigkeitsresistenz in Wasser-basierten Farben sowie in den sich ergebenden Beschichtungsfilmen bzw. auch der chemischen Resistenz (EP 1953195 A1). Zwar nennen die beiden Patentpublikationen als zu behandelnde Oberfläche neben Metall auch Kunststoffe, sie betreffen jedoch nicht die Galvanik. Eine weitere Patentpublikation EP 1659156 A1 beschreibt spezielle Pulver-Beschichtungszusammensetzungen und somit keine flüssige Polymerformulierung und weist auch keinen Bezug zur Galvanik auf.

Kunststoffoberflächen werden häufig galvanisiert, um veredelte wie z.B. verchromte Oberflächen zu erzeugen. Anwendungen sind z.B. Badarmaturen, Zierleisten, Bedienelemente im Automotivbereich, Gehäuseteile von Mobiltelefonen und vieles mehr. Kunststoffe sind aber in der Regel nicht elektrisch leitfähig und vor allem bieten Kunststoffe, im Gegensatz zu Metallen, keine chemischen Haftungsmöglichkeiten für die metallischen Überzüge.

Die Kunststoffgalvanik nach dem aktuellen Stand der Technik bedarf folgender Schritte:
- Auswahl eines Kunststoffs mit Polymerdomänen, die durch oxidierende Ätzverfahren entfernt werden können. Hier werden aktuell vor allem ABS (Acrylnitril-Butadien-Styrol) oder ABS / PC (Polycarbonat) Blends eingesetzt. Dieses schränkt die Auswahl an Werkstoffen erheblich ein.
- Entfernen der am leichtesten oxidierbaren Domänen (Butadien) mit Chromschwefelsäure. Diese ist extrem aggressiv und enthält physiologisch bedenkliches sechswertiges Chrom. Durch diese Behandlung entstehen submikrobis mikrometergroße Kavernen in der Kunststoffoberfläche, die nach der Metallisierung für die Haftung der Metallschicht verantwortlich sind (mechanische Verklammerung durch "Druckknopfeffekt").
- Animpfen der Oberfläche mit Palladiumsalzen oder anderen Edelmetallkeimen um eine Leitfähigkeit zu erzeugen.
- Abscheiden einer Startmetallisierung auf autokatalytischem Weg auf den Edelmetallkeimen, darauf elektrochemisches Abscheiden von meist mehreren Metallschichten.

Vor diesem Hintergrund besteht der Bedarf, Oberflächen bereitzustellen, die durch mildere und/oder kostengünstigere und/oder weniger gesundheitsschädliche Vorbehandlungsschritte einer Galvanisierung zugänglich sind oder die Galvanisierung erleichtern.

Erfindungsgemäß wird diese Aufgabe gelöst durch eine Verwendung von Metallpigmenten in einer flüssigen Polymerformulierung zur Verbesserung der Galvanisierbarkeit der Oberfläche der Polymerformulierung nach ihrer Aushärtung, wobei die Metallpigmente eine Beschichtung umfassen, die ein Aufschwimmen der Metallpigmente in der flüssigen Polymerformulierung und/oder in der Polymerformulierung während des Aushärtens bewirkt.

Bevorzugt bedeutet "Aufschwimmen" im Sinne der vorliegenden Erfindung, dass sich die Pigmente nach Auftrag der Polymerformulierung auf eine Oberfläche in Richtung der Grenzfläche bewegen, die sich zwischen der Polymerformulierung und der Luft bzw. einem anderen entsprechenden gasförmigen Medium ergibt.

Eine "Verbesserung der Galvanisierbarkeit" umfasst im Sinne der vorliegenden Erfindung selbstverständlich auch, dass eine Galvanisierbarkeit überhaupt ermöglicht wird. Darüber hinaus liegt insbesondere dann eine Verbesserung der Galvanisierbarkeit vor, wenn unter Einsatz von weniger Energie und/oder weniger Vorbereitungsaufwand eine Galvanisierung vorgenommen werden kann.

Pigmente im Sinne der vorliegenden Erfindung sind bevorzugt (beschichtete) Metallpartikel, die in der eingesetzten Polymerformulierung unlöslich sind.

Eine "flüssige Polymerformulierung" im Sinne dieser Erfindung ist eine Formulierung, die im flüssigen Zustand vorliegt und polymerisierbare Bestandteile (Bindemittel) umfasst. Weitere typische Bestandteile einer "flüssigen Polymerformulierung" sind dabei Füllstoffe, Pigmente, Lösemittel, Additive und/oder Härtungsmittel. Bevorzugt ist dabei, dass die flüssige Polymerformulierung ein Lack ist.

Die Erfinder haben durch aufwändige Versuche herausgefunden, dass es möglich ist, durch aufschwimmende Metallpigmente (im Sinne der obigen Definition) gute Voraussetzungen für einen Galvanisierungsschritt auf der Oberfläche einer ausgehärteten Polymerformulierung zu schaffen. Insbesondere werden so eine Vielzahl von effektiven Nachbearbeitungsmöglichkeiten eröffnet (vgl. auch weiter unten), die besonders gute, kostengünstige und/oder für den Menschen wenig gesundheitsbelastende Galvanisierungsverfahren zulassen.

Kern der vorliegenden Erfindung ist dabei, dass durch das Aufschwimmen der Metallpartikel metallische Ankerpunkte für den durch die Galvanisierung aufzubringenden Metallüberzug zur Verfügung gestellt werden oder dass an der Oberfläche genügend metallische Partikel vorhanden sind, die durch milde Säuren oder Laugen weggeätzt werden können, sodass für die Haftung des durch die Galvanisierung aufzubringenden Metallüberzugs notwendige Kavernen in ausreichender Menge erzeugt werden können. Weiterhin ist es vorteilhaft, dass über das Aufschwimmen im Bereich der Oberfläche auch eine so hohe Konzentration an Metallpigmenten erzeugt werden kann, dass die Perkolationsschwelle überschritten wird und so die für die Galvanisierbarkeit notwendige Leitfähigkeit im Bereich der ausgehärteten Polymerformulierung hergestellt werden kann.

Überraschenderweise hat sich dabei herausgestellt, dass durch die durch die erfindungsgemäße Erfindung Anreicherung an Pigmenten an der Lackoberfläche die sonstigen Eigenschaften des Lackfilms nicht beeinträchtigt werden. Es kann insbesondere die notwendige Einsatzmenge der Metallpartikel stark reduziert werden, da durch die erfindungsgemäße Verwendung in den von der zu galvanisierenden Oberfläche entfernteren Bereichen der Lackschicht keine oder nur deutlich weniger Metallpigmente als im Bereich der Oberfläche nach der Aushärtung zu finden sein werden.

Bevorzugt ist im Sinne der Erfindung eine Verwendung, wobei das Aufschwimmen durch eine Grenzflächenspannung der Beschichtung der Metallpigmente zu der Gesamtmenge der weiteren Bestandteile der flüssigen Polymerformulierung und/oder des in der Polymerformulierung enthaltenen Bindemittels bewirkt wird, die eine vollständige Benetzung der beschichteten Metallpigmente verhindert.

Durch das Wählen der geeigneten Bestandteile der Polymerformulierung ist es dem Fachmann möglich, die Grenzflächenspannungen zwischen den erfindungsgemäß zu verwendenden (beschichteten) Metallpigmenten und den weiteren Bestandteilen der Polymerformulierung, insbesondere des in der Polymerformulierung enthaltenen Bindemittels so einzustellen, dass ein besonders effektives Aufschwimmen der Metallpigmente erfolgt.

Bevorzugt umfasst die Polymerformulierung für die erfindungsgemäße Verwendung keine Kohlenstoff-Nanotubes. Dadurch sind weniger aufwändige Polymerformulierungen einsetzbar.

Es ist erfindungsgemäß bevorzugt, dass die Beschichtung der Metallpigmente eine Verbindung umfasst, ausgewählt aus der Gruppe bestehend aus C₁₀ - C₂₄-Fettsäuren oder aus einer dieser Verbindungen oder aus einer Mischung aus mehr als einer dieser Verbindungen besteht.

Bevorzugt ist, dass die in der Beschichtung umfasste Verbindung (oder die Verbindung, aus der die Beschichtung besteht) eine C₁₂-C₂₀-Fettsäure, weiter bevorzugt eine C₁₄-C₁₈-Fettsäure und besonders bevorzugt eine C₁₆-Fettsäure ist. Die Fettsäuren können gesättigt oder ungesättigt sein, wobei es bevorzugt ist, dass die Fettsäure gesättigt ist. Ganz besonders bevorzugt ist dabei Stearinsäure.

Die Größe der metallischen Kerne der erfindungsgemäß zu verwendenden Metallpartikel ist dabei im Bereich von 0,01 - 10 µm Durchmesser, bevorzugt 0,1 - 8 µm Durchmesser und besonders bevorzugt 0,1 - 5 µm Durchmesser. Dabei bezieht sich die Durchmesserangabe auf das Zahlenmittel, bestimmt nach lichtmikroskopischer oder elekronenmikroskopischer Vermessung von Partikeln.

Weitere Größenangaben zu den Partikeln in diesem Text beziehen sich jeweils auf das genannte Messverfahren und ggf. auf das Zahlenmittel.

Bevorzugt im Sinne der vorliegenden Erfindung ist, dass die Metallpigmente sphärisch, nadelförmig, plättchenförmig und/oder eine Aggregation aus einer Vielzahl solcher Pigmente ist.

Sphärisch im Sinne der vorliegenden Erfindung sind solche Metallpigmente, bei denen der größte Durchmesser des Metallkerns von dem kleinsten Durchmesser des Metallkerns um maximal 20 % abweicht.

Plättchenförmig im Sinne der vorliegenden Erfindung sind solche Metallpigmente, bei denen der Durchmesser des Metallkerns von zwei Raumrichtungen zu der dritten jeweils um mindestens den Faktor 10 größer ist.

Nadelförmig im Sinne der vorliegenden Erfindung sind solche Pigmente, bei denen die Durchmesser des Metallkerns in einer Raumrichtung um mindestens den Faktor 10 größer sind als in den beiden anderen Raumrichtungen.

Selbstverständlich sind die drei Raumrichtungen für die Bestimmung von plättchenförmigen bzw. nadelförmigen Pigmenten jeweils senkrecht zueinander stehend.

Bevorzugt ist eine erfindungsgemäße Verwendung, wobei die Metallpigmente neben der Beschichtung ein Metall umfassen, ausgewählt aus der Gruppe bestehend aus Mg, Ti, V, Cr, Mo, Fe, Co, Ni, Pd, Pt, Cu, AI, Zn, Sn, Bi, Au, Ag und deren Legierungen, oder aus einem dieser Metalle bestehen.

Besonders bevorzugt in diesem Zusammenhang sind Mg, Fe, Cu, AI, Zn, Sn, Ag und Au.

Mit diesen Metallen lassen sich die Vorzüge der vorliegenden Erfindung besonders gut nutzen.

Erfindungsgemäß einzusetzende Metallpigmente sind insbesondere in der Größenordnung von 1 - 5 µm bereits heute kommerziell verfügbar. Sie werden auch als "Leafing-Metallpigmente" bezeichnet. Dabei ist die Einstellung der Eigenschaft des Aufschwimmens ("leafing") ebenfalls Stand der Technik und erfolgt durch die Behandlung der Metallpigmente mit organischen Fettsäuren, insbesondere Stearinsäure. Kommerzielle Metallpigmente mit Leafing-Eigenschaften sind seit vielen Jahren verfügbar, zum Beispiel als klassische Ofenbronze.

Die Leafing-Metallpigmente werden regelmäßig durch Mahlen (insbesondere Walzen) von Metallpigmenten mit Stearinsäure (oder anderen Fettsäuren) als Mahlhilfsmittel erzeugt. Insbesondere so erzeugte (plättchenförmige) Aluminium-Pigmente zeigen durch das Aufschwimmen in Lacken einen deutlich metallischeren Effekt als andere Pigmente, sodass sie im Stand der Technik für Metallic-Lackierungen eingesetzt werden. Es sind aber auch sphärische (ungemahlene) Metallpigmente mit Stearinsäurebehandlung verfügbar.

Eine Galvanisierung dieser Lackierungen ist aber bislang nicht vorgenommen worden.

Bevorzugt im Sinne der vorliegenden Erfindung ist es, dass die Polymerformulierung ein Lack ist. Zusätzlich hierzu oder unabhängig hiervon ist es im Sinne der Erfindung bevorzugt, dass die Polymerformulierung auf einem Monomersystem basiert, ausgewählt aus der Gruppe bestehend aus Urethanen, Epoxiden und (Meth)Acrylaten oder dass sie eine Alkydharzformulierung ist.

Teil der Erfindung ist eine für eine erfindungsgemäße Verwendung geeignete flüssige Polymerformulierung, wie sie weiter oben im Zusammenhang mit der erfindungsgemäßen Verwendung definiert ist, zur Verbesserung der Galvanisierbarkeit der Oberfläche der Polymerformulierung nach Ihrer Aushärtung, umfassend eine Polymerformulierung mit Metallpigmenten, wie oben erfindungsgemäß definiert, wobei die Metallpigmente sphärisch, nadelförmig und/oder eine Aggregation, z.B. aus einer Vielzahl von Pigmenten einer oder mehrerer, dieser Formen sind und die Metallpigmente eine Beschichtung umfassen, die ein Aufschwimmen der Metallpigmente in der flüssigen Polymerformulierung und/oder in der Polymerformulierung während des Aushärtens bewirkt, wobei die Beschichtung der Metallpigmente eine Verbindung umfasst, ausgewählt aus der Gruppe bestehend aus C₁₀ - C₂₄-Fettsäuren oder aus einer dieser Verbindungen oder aus einer Mischung aus mehr als einer dieser Verbindungen besteht.

Diese flüssige Polymerformulierung kann die Grundlage für galvanisierende Beschichtungen und/oder Festkörper bilden.

Bevorzugt im Sinne der Erfindung ist dabei eine erfindungsgemäße flüssige Polymerformulierung, wobei das Metallpigment zu 0,1 bis 50 Gew-%, bevorzugt 1 bis 45 Gew.-%, weiter bevorzugt 5 bis 40 Gew-%, jeweils bezogen auf die Gesamtmasse der Polymerformulierung enthalten ist.

Mit diesen Metallpigmentanteilen lassen sich die erfindungsgemäß gewünschten Effekte besonders gut erzielen.

Teil der Erfindung ist auch ein Verfahren zum Galvanisieren einer Polymeroberfläche, umfassend die Schritte:
a) Bereitstellen einer flüssigen Polymerformulierung wie weiter oben definiert,
b) Aushärten der Polymerformulierung unter Bedingungen, die eine Anreicherung des Metallpigmentes an der zur Atmosphäre ausgerichteten Seite bewirkt
und c) Galvanisieren der zur Atmosphäre ausgerichteten Seite der ausgehärteten Polymerformulierung.

Bevorzugt für das erfindungsgemäße Verfahren ist dabei, dass nach Schritt b) und vor Schritt c) die zur Atmosphäre ausgerichtete Seite der ausgehärteten Polymerformulierung zur Freilegung von Metallpigmenten bearbeitet wird.

Weiterhin kann es für das erfindungsgemäße Verfahren bevorzugt sein, dass vor Schritt c) an der zur Atmosphäre ausgerichteten Seite der ausgehärteten Polymerformulierung Metallpigmente entfernt werden.

Weiterhin kann ein erfindungsgemäßes Verfahren bevorzugt sein, wobei nach der Entfernung von Metallpigmenten eine Animpfung mit Edelmetallkeimen, vorzugsweise mit Palladium erfolgt.

Zusätzlich oder unabhängig von den zuvor bevorzugten Varianten kann es bevorzugt sein, dass für das erfindungsgemäße Verfahren die Polymerformulierung so gewählt ist, dass sie nach dem Aushärten stromleitend ist.

Dabei ist es möglich, handelsübliche, stromleitende Polymerformulierungen einzusetzen oder aber (was auch eine bevorzugte Variante des erfindungsgemäßen Verfahrens ist) die Konzentration der Metallpigmente und das Aushärtungsverfahren für die Polymerformulierung so zu wählen, dass die Flächenkonzentration der Metallpigmente im Bereich der zur Atmosphäre ausgerichteten Fläche die Perkolationsschwelle überschreitet.

Diese erfindungsgemäßen Verfahren lassen insbesondere in ihren bevorzugten Ausgestaltungsformen folgende bevorzugte Varianten zu:
a. Einbau von erfindungsgemäß zu verwendenden Metallpigmenten, beispielsweise Aluminiumpigmenten in eine elektrisch nicht-leitenden Polymerformulierung, insbesondere einem Flüssiglack. Aushärtung der Polymerformulierung z.B,. nach Auftrag des Lacks auf eine Substratoberfläche. Entfernung der Metallpartikel durch Ätzen mit geeigneten, möglichst milden Säuren oder Laugen. Anschließen (Animpfen mit Edelmetallkeimen und außenstromlose und galvanische Metallabscheidung (analog dem oben beschriebenen klassischen Verfahren).
b. Einbau von erfindungsgemäß zu verwendenden Metallpigmenten, beispielsweise Aluminiumpigmenten in eine Polymerformulierung, insbesondere einem Flüssiglack, die bereits elektrisch leitfähig ist. Leitfähige Polymerformulierungen, insbesondere Lacke sind verfügbar. Die Leitfähigkeit wird durch den Einbau von leitfähigen Partikeln (z.B. Leitruß, Graphen, Carbon-Nanotubes, Indiumzinnoxid (ITO), Silber) oder durch Leitfähigkeitsadditive (z.B. quaternäre Ammoniumsalze) erreicht oder durch die Verwendung von intrinsisch leitfähigen Polymeren wie z.B. Polyanilin, Polypyrrol. Anschließend erfolgen die Aushärtung, das Wegätzen der Metallpartikel und die galvanische Metallabscheidung. Auf das Animpfen mit Edelmetallkeimen kann hier verzichtet werden.
c. Einbau von erfindungsgemäß zu verwendenden Metallpigmenten, beispielsweise Kupferpigmenten in eine elektrisch nicht-leitende Polymerformulierung, insbesondere einen Flüssiglack. Anschließend Animpfen mit Edelmetallkeimen und außenstromlose und galvanische Metallabscheidung (analog dem oben beschriebenen klassischen Verfahren) oder direkte autokatalytische Metallabscheidung um die Metallpigmente. Die Metallpartikel verbleiben hier im Polymer und bilden die Ankerpunkte für den galvanischen Metallüberzug.
d. Einbau von erfindungsgemäß zu verwendenden Metallpigmenten, beispielsweise Kupferpigmenten in eine elektrisch nicht-leitende Polymerformulierung, insbesondere Flüssiglack. Die Konzentration der Pigmente an der (später ausgehärteten) Oberfläche wird so gewählt, dass die Perkolationsschwelle überschritten wird und die Oberfläche dadurch eine elektrische Leitfähigkeit erhält. Anschließend galvanische Metallabscheidung. Die Metallpartikel verbleiben hier im Polymer und bilden die Ankerpunkte für den Metallüberzug. Auf das Animpfen mit Edelmetallkeimen kann hier verzichtet werden.
e. Einbau von erfindungsgemäß zu verwendenden Metallpigmenten, beispielsweise Kupferpigmenten in eine Polymerformulierung, die bereits elektrisch leitfähig ist. Leitfähige Polymerformulierungen, insbesondere Lacke sind verfügbar. Die Leitfähigkeit wird durch den Einbau von leitfähigen Partikeln (z.B. Leitruß, Graphen, Carbon-Nanotubes, Indiumzinnoxid (ITO), Silber) oder Leitfähigkeitsadditiven erreicht oder durch die Verwendung von intrinsisch leitfähigen Polymeren wie z.B. Polyanilin, Polypyrrol. Auf das Animpfen mit Edelmetallkeimen kann hier verzichtet werden. Die Metallpartikel verbleiben im Lackfilm und bilden die Ankerpunkte für den Metallüberzug.

Für alle beschriebenen Varianten gilt: Statt Kupfer können auch bevorzugt andere edle Metalle verwendet werden, z.B. Silber und Gold. Statt Aluminium können auch bevorzugt andere unedle Metalle verwendet werden, z.B. Magnesium oder Zink. Die Freilegung der Metallpartikel an der Oberfläche kann bevorzugt durch Plasmaätzen oder Schleifen (jeweils Entfernen der organischen Lackmatrix in den obersten Bereichen der Lackschicht) unterstützt werden oder erfolgen. Die Freilegung von Partikeln an der Lackoberfläche durch Plasmaätzen ist bereits für andere anorganische Partikel gezeigt worden.

Grundsätzlich kann die erfindungsgemäße Verwendung und auch das erfindungsgemäße Verfahren sowohl für die Herstellung von Beschichtungen, insbesondere Lacken, als auch für die Herstellung von Vollkörpern oder Teilen von Vollkörpern, wie z.B. Faserverbundkunststoffe (FVK), insbesondere solche unter Einsatz von Prepreg, und auch auf Polymerlagen, die in der Fertigung von FVK eingesetzt werden (z.B. wie beim System "Surface Master"). Somit lässt sich eine Galvanisierung für eine Vielzahl von Anwendungen gewährleisten.

Wie bereits oben angedeutet, weist die erfindungsgemäße Verwendung bzw. die erfindungsgemäßen Verfahren eine Reihe von Vorteilen auf:
- Keine Anwendung von hochgiftigen und/oder krebserregenden Stoffen, insbesondere Chrom-6-Verbindungen ist erforderlich.
- Dadurch ist eine Übertragbarkeit auf größere Bauteile, die nicht in kleinen, abgeschlossenen Anlagen bearbeitet werden können, wie z.B. Tragflächensegmente oder andere Vollkörper, gegeben.
- Bei einer entsprechenden Verfahrensausgestaltung ist es möglich, auf das teure und zusätzliche Verfahrensschritte erforderliche Animpfen mit Edelmetallkeimen zu verzichten.
- Eine deutlich größere Werkstoffauswahl ist möglich, insbesondere besteht keine Beschränkung auf die oben beschriebenen Materialien. Dabei können entweder preisgünstigere Werkstoffe eingesetzt werden oder solche, die verbesserte Eigenschaften haben wie z. B. höhere Festigkeiten (bei Faserverbundstoffen usw.)
- Es werden bislang auch für die Galvanisierung unzugängliche Polymersysteme einsetzbar.

Entsprechend dem oben Gesagten ist Teil der Erfindung auch ein Bauteil mit einer galvanisierten Oberfläche, die mittels der erfindungsgemäßen Verwendung oder nach einem der erfindungsgemäßen Verfahren hergestellt wurde oder herstellbar ist.

Wie bereits angedeutet, sind solche Bauteile bislang noch nicht zugänglich gewesen. Man kann den Bauteilen aber bei einer entsprechenden Untersuchung ansehen, ob sie nach dem erfindungsgemäßen Verfahren herstellbar sind, insbesondere dann, wenn die entsprechend erfindungsgemäß zu verwendenden Partikel oder Rückstände davon noch in der Grenzfläche unterhalb der Galvanisierungsschicht (also in der Polymermatrix nach der Aushärtung) feststellbar sind.

### Beispiele:

### Beispiel 1:

Lackierung eines Bauteiles im Rahmen des erfindungsgemäßen Verfahrens bzw. unter der erfindungsgemäßen Verwendung für eine nachfolgende Galvanisierung

Es werden die folgenden Lacksysteme (Polymerformulierungen) bereitgestellt:

**Beispiel 1a):**

| Typ | Bezeichnung (Beispiel) | Menge (Gewichtsanteile) |
|---|---|---|
| OH-funktionelles Acrylat | Desmophen A 160 SN | 46 |
| Lösemittel | Solvesso 170 | 20 |
| Aluminiumpigment (Leafing) | ROGAL Aluminium 2µm (Fa. Schlenk) | 20 |
| Rheologieadditiv | Bentone 38 | 0,2 |
| | | |
| NCO-funktionller Härter | Desmodur N75 MPA/X | 11,5 |

**Beispiel 1b):**

| Typ | Bezeichnung (Beispiel) | Menge (Gewichtsanteile) |
|---|---|---|
| OH-funktionelles Acrylat | Desmophen A 160 SN | 26 |
| Leitruss | Printex XE 2B | 20 |
| Lösemittel | Solvesso 170 | 20 |
| Aluminiumpigment (Leafing) | ROGAL Aluminium 2µm (Fa. Schlenk) | 20 |
| Rheologieadditiv | Bentone 38 | 0,2 |
| | | |
| NCO-funktionller Härter | Desmodur N75 MPA/X | 11,5 |

**Beispiel 1c):**

| Typ | Bezeichnung (Beispiel) | Menge (Gewichtsanteile) |
|---|---|---|
| OH-funktionelles Acrylat | Desmophen A 160 SN | 46 |
| Lösemittel | Solvesso 170 | 20 |
| Kupferpigment (Leafing) | Unicoat 3260 | 20 |
| Rheologieadditiv | Bentone 38 | 0,2 |
| | | |
| NCO-funktionller Härter | Desmodur N75 MPA/X | 11,5 |

**Beispiel 1d):**

| Typ | Bezeichnung (Beispiel) | Menge (Gewichtsanteile) |
|---|---|---|
| OH-funktionelles Acrylat | Desmophen A 160 SN | 46 |
| Lösemittel | Solvesso 170 | 20 |
| Kupferpigment (Leafing) | Unicoat 3260 | 50 |
| Rheologieadditiv | Bentone 38 | 0,2 |
| | | |
| NCO-funktionller Härter | Desmodur N75 MPA/X | 11,5 |

**Beispiel 1e):**

| Typ | Bezeichnung (Beispiel) | Menge (Gewichtsanteile) |
|---|---|---|
| OH-funktionelles Acrylat | Desmophen A 160 SN | 26 |
| Leitruss | Printex XE 2B | 20 |
| Lösemittel | Solvesso 170 | 20 |
| Kupferpigment (Leafing) | Unicoat 3260 | 20 |
| Rheologieadditiv | Bentone 38 | 0,2 |
| | | |
| NCO-funktionller Härter | Desmodur N75 MPA/X | 11,5 |

Die eigentliche Lackherstellung erfolgt durch Einrühren der Metallpigmente in das Lösemittel. In die klumpenfreie Mischung wird das Bindemittel langsam unter Rühren zugegeben, anschließend wird das Rheologieadditiv eingerührt und der fertige Lack für weitere 20 Minuten gerührt. Anschließend wird der Härter zugegeben, und die Auftragung auf das Substrat erfolgt mittels pneumatischer Spritzapplikation. Nachfolgend wird der applizierte Lack für mehrere Stunden bei Raumtemperatur ausgehärtet.

Für die Lacke gemäß der Varianten b) und e) wird der Leitguss vor Zugabe des Bindungsmittels in diesem dispergiert.

### Beispiel 2: Galvanisieren der Lackoberflächen aus Beispiel 1.

Grundsätzlich werden die zu galvanisierenden Oberflächen vor dem eigentlichen Galvanisierungsschritten nach Bedarf mit den in der Galvanisierung üblichen Verfahren entfettet, gebeizt (wenn gewünscht) und konditioniert. Dabei kann es notwendig sein, einzelne dieser Vorbehandlungsschritte an die mittels der erfindungsgemäßen Verwendung hergestellten Oberflächen anzupassen. Zwischen den einzelnen Vorbehandlungsschritten und ggf. den einzelnen Metallisierungsschritten erfolgen jeweils Spülschritte.

### Beispiel 2a):

Die mit der Lackrezeptur aus Beispiel 1 a) hergestellte Oberfläche wird zum Wegätzen der Aluminiumpigmente mit basischem Medium behandelt. Hier wird beispielsweise Kalilauge mit d) KOH = 1,25 % eingesetzt. Die Oberfläche wird anschließend wahlweise mit einer ein- oder mehrstufigen chemischen Belegung mit Edelmetallkeimen (hier Palladiumkeime) wie im Stand der Technik üblich behandelt (Animpfen). Der erste Metallisierungsschritt folgt hiernach als Außenstromlose (autokatalytische) Abscheidung einer Metallschicht, hier einer Nickel- bzw. einer Kupferschicht. Dabei läuft der autokatalytische Prozess an den Edelmetallkeimen ab. Die Anbindung der Metallschicht auf dem Lack erfolgt dabei durch mechanische Verankerung der Metallschicht in den Kavernen, die durch das Entfernen der Pigmente in der Polymerschicht entstanden sind.

Wenn die Oberfläche flächig mit der außenstromlos erzeugten Schicht bedeckt ist, kann darauf ein beliebiger Aufbau einer ein- oder mehrlagigen Galvanikschicht mit allen Verfahren der Galvanotechnik erfolgen.

### Beispiel 2b):

Die mittels der Lackformulierung aus Beispiel 1b) entstandene Oberfläche wird analog zu Beispiel 2a) bis zur Entfernung der Pigmente behandelt. Hierbei zeigt sich, dass der Leitruss nur auf der Oberfläche entfernt wird, nicht aber in der eigentlichen Polymerschicht. In diesem Fall kann auf ein Animpfen mit Edelmetallkeimen verzichtet werden, da die Leitfähigkeit der Oberfläche für eine direkte Galvanisierung ausreicht. Somit kann der erste Metallisierungsschritt hierbei direkt nachfolgend ausgeführt werden und kann sowohl eine außenstromlose (autokatalytische) Abscheidung einer Metallschicht, beispielsweise einer Nickel- oder Kupferschicht sein oder das Abscheiden einer mit Außenstrom erzeugten beliebigen galvanischen Schicht. Auch hier erfolgt die Anbindung der Metallschicht durch mechanische Verankerung in Kavernen, die durch die entfernten Pigmente entstanden sind.

Wenn die Oberfläche flächig mit der ersten Schicht bedeckt ist, kann wie in Beispiel 2a) ein weiterer Aufbau erfolgen.

### Beispiel 2c):

Eine Oberfläche, die aus dem in Beispiel 1c) erstellten (ausgehärteten) Lack besteht ,wird analog dem Beispiel 2a) einer Edelmetallbekeimung unterworfen, um eine ausreichende Leitfähigkeit der Oberfläche sicherzustellen. Alternativ oder auch bevorzugt zusätzlich ist es möglich, als ersten Metallisierungsschritt eine außenstromlose (autokatalytische) Abscheidung einer Metallschicht, beispielsweise einer Nickel- oder Kupferschicht vorzunehmen. Der autokatalytische Prozess läuft an den freigelegten Metallpigmenten bzw. an den angeimpften Edelmetallkeimen ab. Die Anbindung und damit die Ausbildung einer haftenden Schicht erfolgt durch das Wachstum der außenstromlosen Schicht an den Metallpigmenten.

Wenn die Oberfläche flächig mit der außenstomlos erzeugten Schicht bedeckt ist, kann darauf ein beliebiger Aufbau einer ein- oder mehrlagigen Galvanikschicht mit allen Verfahren der Galvanotechnik erfolgen.

### Beispiel 2d):

Eine aus dem Lacksystem gemäß Beispiel 1d) hergestellte Oberfläche ist bereits ausreichend leitfähig. Da die Konzentration an Metallpigmenten so hoch ist, dass die Perkolationsschwelle erreicht wurde, ist eine direkte Galvanisierung somit möglich, wie z.B. in Beispiel 2b) beschrieben. Hier erfolgt die Anbindung einer anhaftenden Schicht durch metallische Verbindung der ersten abgeschiedenen Schicht mit den in der Lackoberfläche verbliebenden Metallpigmenten.

Analog zu den vorherigen Beispielen kann die Oberfläche, sobald sie die Fläche mit der ersten Schicht bedeckt ist, beliebigen weiteren Galvanisierungsschritten unterworfen werden.

### Beispiel 2e):

Auch eine mittels eines Lacks gemäß Beispiel 1e) hergestellte Oberfläche ist bereits ausreichend leitfähig, so dass eine direkte Abscheidung einer Metallschicht analog zu Beispiel 2d) möglich ist.

Auch hier erfolgt die Anbindung an den in der Schicht verbliebenden Metallpigmenten. Eine nachfolgende Bearbeitung ist wie in den Beispielen 2a) bis d) möglich.

### Beispiel 3: Nachfolgebehandlung

Die aus den Beispielen 2a) bis 2e) enstandenen Oberflächen werden verchromt. Dies bietet sich z.B. für Bedien- und Zierelemente an. Die Chromschicht kann dabei in verschiedenen optischen (silber, bläulich, dunkel) Nuancen abgestimmt werden.

Unter der Chromschicht wird hierzu ein mehrlagiger Aufbau hauptsächlich aus verschiedenen Nickel- und Kupferschichten oder Legierungsschichten vorgesehen. Das gesamte Schichtsystem kann so in seinem Glanzgrad abgestimmt werden, so dass neben hochglänzenden Oberflächen auch matte und halbglänzende Schichten erzeugt werden können.

### Beispiel 4: Alternative Weiterverarbeitung

Schichtaufbau wie in Beispiel 3 beschrieben, allerdings besteht die letzte Schicht nicht aus Chrom sondern aus Edelmetallen wie beispielsweise Gold, Ruthenium, Palladium oder Platin. Auch Edelmetallegierungen und Buntmetallegierungen sind als letzte Schicht möglich.Diese Schichten bieten sich für Zierelemente, wie beispielsweise Modeschmuck an, die oberste Schicht besteht dabei bevorzugt aus Buntmetallegierungen.

Mittels des erfindungsgemäßen Verfahrens bzw. der erfindungsgemäßen Verwendung können auch funktionelle Schichten für elektronische und elektrotechnische Anwendungen (die Funktionsschicht besteht dabei beispielsweise aus Kupfer) oder Schichten für Abschirmung (die Schichten bestehen dabei beispielsweise aus Kupfer, Nickel, Edelmetallen oder Legierungen alleine oder in Kombination) hergestellt werden.

Auch funktionelle Schichten, bei denen die oberste Lage aus einer Hartchromschicht, einer Nickelschicht, einer Nickellegierungsschicht oder einer Dispersionsschicht besteht, sind erfindungsgemäß möglich. Diese Schichten können einzeln oder in Kombination mehrlagig auf dem erfindungsgemäß vorbehandelten Substrat abgeschieden werden.

## Patentansprüche

1. Verwendung von Metallpigmenten in einer flüssigen Polymerformulierung zur Verbesserung der Galvanisierbarkeit der Oberfläche der Polymerformulierung nach ihrer Aushärtung, wobei die Metallpigmente eine Beschichtung umfassen, die ein Aufschwimmen der Metallpigmente in der flüssigen Polymerformulierung und/oder in der Polymerformulierung während des Aushärtens bewirkt.

2. Verwendung nach Anspruch 1, wobei das Aufschwimmen durch eine Grenzflächenspannung der Beschichtung der Metallpigmente zu der Gesamtmenge der weiteren Bestandteile der flüssigen Polymerformulierung und/oder des in der Polymerformulierung enthaltenen Bindemittels bewirkt wird, die eine vollständige Benetzung der beschichteten Metallpigmente verhindert.

3. Verwendung nach Anspruch 1 oder 2, wobei die Beschichtung der Metallpigmente eine Verbindung umfasst, ausgewählt aus der Gruppe bestehend aus C₁₀ - C₂₄-Fettsäuren oder aus einer dieser Verbindungen oder aus einer Mischung aus mehr als einer dieser Verbindungen besteht.

4. Verwendung nach einem der Ansprüche 1 bis 3, wobei die Metallpigmente sphärisch, nadelförmig, plättchenförmig und/oder eine Aggregation aus einer Vielzahl solcher Pigmente sind.

5. Verwendung nach einem der Vorangehenden Ansprüche, wobei die Metallpigmente neben der Beschichtung ein Metall umfassen, ausgewählt aus der Gruppe bestehend aus Mg, Ti, V, Cr, Mo, Fe, Co, Ni, Pd, Pt, Cu, Al, Zn, Sn, Bi, Au, Ag und deren Legierungen, oder aus einem dieser Metalle bestehen.

6. Verwendung, nach einem der vorangehenden Ansprüche, wobei die Polymerformulierung ein Lack ist.

7. Verwendung nach einem der vorangehenden Ansprüche, wobei die Polymerformulierung auf einem Monomersystem basiert, ausgewählt aus der Gruppe bestehend aus Urethanen, Epoxiden und (Meth)Acrylaten oder eine Alkydharzformulierung ist.

8. Flüssige Polymerformulierung für eine Verwendung nach einem der Ansprüche 1 bis 7 zur Verbesserung der Galvanisierbarkeit der Oberfläche der Polymerformulierung nach ihrer Aushärtung, umfassend eine Polymerformulierung mit Metallpigmenten, wie in einem der Ansprüche 1 bis 6 definiert, wobei die Metallpigmente sphärisch, nadelförmig und/oder eine Aggregation dieser Formen sind und die Metallpigmente eine Beschichtung umfassen, die ein Aufschwimmen der Metallpigmente in der flüssigen Polymerformulierung und/oder in der Polymerformulierung während des Aushärtens bewirkt, wobei die Beschichtung der Metallpigmente eine Verbindung umfasst, ausgewählt aus der Gruppe bestehend aus C₁₀ - C₂₄-Fettsäuren oder aus einer dieser Verbindungen oder aus einer Mischung aus mehr als einer dieser Verbindungen besteht.

9. Flüssige Polymerformulierung nach Anspruch 8, wobei das Metallpigment zu 0,1 bis 50 Gew-%, bevorzugt 1 bis 45 Gew.-%, weiter bevorzugt 5 bis 40 Gew-%, jeweils bezogen auf die Gesamtmasse der Polymerformulierung enthalten ist.

10. Verfahren zum Galvanisieren einer Polymeroberfläche, umfassend die Schritte:
a) Bereitstellen einer flüssigen Polymerformulierung wie in einem der Ansprüche 8 oder 9 definiert,
b) Aushärten der Polymerformulierung unter Bedingungen, die eine Anreicherung des Metallpigmentes an der zur Atmosphäre ausgerichteten Seite bewirken und
c) Galvanisieren der zur Atmosphäre ausgerichteten Seite der ausgehärteten Polymerformulierung.

11. Verfahren nach Anspruch 10, wobei nach Schritt b) und vor Schritt c) die zur Atmosphäre gerichtete Seite der ausgehärteten Polymerformulierung zur Freilegung von Metallpigmenten bearbeitet wird.

12. Verfahren nach Anspruch 10 oder 11, wobei vor Schritt c) an der zur Atmosphäre ausgerichteten Seite der ausgehärteten Polymerformulierung Metallpigmente entfernt werden.

13. Verfahren nach einem der Ansprüche 10 bis 12, wobei nach der Entfernung von den Metallpigmenten eine Animpfung mit Edelmetallkeimen, vorzugsweise mit Palladium erfolgt.

14. Verfahren nach einem der Ansprüche 10 bis 12, wobei die Polymerformulierung so gewählt ist, dass sie nach dem Aushärten stromleitend ist.

15. Verfahren nach einem der Ansprüche 10 bis 12, wobei die Konzentration der Metallpigmente und das Aushärtungsverfahren für die Polymerformulierung so gewählt werden, dass die Flächenkonzentration der Metallpigmente im Bereich der zur Atmosphäre ausgerichteten Fläche die Perkolationsschwelle überschreitet.

16. Gegenstand mit einer wenigstens teilweise galvanisierten Oberfläche, hergestellt oder herstellbar nach einem Verfahren nach einem der Ansprüche 10 bis 15.

17. Gegenstand umfassend eine durch Galvanisierung herstellbare Schicht und angrenzend an diese Schicht eine Polymerschicht, wobei die Polymerschicht im Bereich der Grenzfläche zur durch Galvanisierung herstellbaren Schicht Metallpigmente umfasst, wie in einem der Ansprüche 1, 4 oder 5 definiert.

## Claims

1. Use of metal pigments in a liquid polymer formulation for improving the electroplatability of the surface of the polymer formation after curing thereof, wherein the metal pigments comprise a coating which produces floating of the metal pigments in the liquid polymer formation and/or in the polymer formation as it cures.

2. Use according to Claim 1, wherein the floating is produced by an interfacial tension of the coating of the metal pigments to the entirety of the other constituents of the liquid polymer formation and/or of the binder included in the polymer formation, this interfacial tension preventing complete wetting of the coated metal pigments.

3. Use according to Claim 1 or 2, wherein the coating of the metal pigments comprises a compound selected from the group consisting of C₁₀ - C₂₄ fatty acids or consists of one of these compounds or of a mixture of more than one of these compounds.

4. Use according to any of Claims 1 to 3, wherein the metal pigments are spherical, acicular, lamellar and/or an aggregation of a multiplicity of such pigments.

5. Use according to any of the preceding claims, wherein the metal pigments, besides the coating, comprise a metal selected from the group consisting of Mg, Ti, V, Cr, Mo, Fe, Co, Ni, Pd, Pt, Cu, Al, Zn, Sn, Bi, Au, Ag and alloys thereof, or consist of one of these metals.

6. Use according to any of the preceding claims, wherein the polymer formation is a coating material.

7. Use according to any of the preceding claims, wherein the polymer formation is based on a monomer system selected from the group consisting of urethanes, epoxides and (meth)acrylates or is an alkyd resin formation.

8. Liquid polymer formation for use according to any of Claims 1 to 7 for improving the electroplatability of the surface of the polymer formation after curing thereof, comprising a polymer formation with metal pigments as defined in any of Claims 1 to 6, wherein the metal pigments are spherical, acicular and/or an aggregation of these forms and the metal pigments comprise a coating which produces floating of the metal pigments in the liquid polymer formation and/or in the polymer formation as it cures, wherein the coating of metal pigments comprises a compound selected from the group consisting of C₁₀ - C₂₄ fatty acids or consists of one of these compounds or of a mixture of more than one of these compounds.

9. Liquid polymer formation according to Claim 8, wherein the metal pigment is included at 0.1 to 50 wt%, preferably 1 to 45 wt%, more preferably 5 to 40 wt%, based in each case on the total mass of the polymer formation.

10. Method for electrocoating a polymer surface, comprising the steps of:
a) providing a liquid polymer formation as defined in either of Claims 8 and 9,
b) curing the polymer formation under conditions which produce accumulation of the metal pigment at the side oriented to the atmosphere, and
c) electroplating the side of the cured polymer formation that is oriented to the atmosphere.

11. Method according to Claim 10, wherein, after step b) and before step c), the side of the cured polymer formation that is orientated to the atmosphere is processed to expose metal pigments.

12. Method according to Claim 10 or 11, wherein, before step c), metal pigments are removed at the side of the cured polymer formation that is oriented to the atmosphere.

13. Method according to any of Claims 10 to 12, wherein, after the removal of the metal pigments, seeding takes place with noble metal seeds, preferably with palladium.

14. Method according to any of Claims 10 to 12, wherein the polymer formation is chosen such that after curing it is current-conducting.

15. Method according to any of Claims 10 to 12, wherein the concentration of the metal pigments and the curing method for the polymer formation are chosen such that the concentration of the metal pigments per unit area in the region of the area oriented to the atmosphere exceeds the percolation threshold.

16. Article having an at least partly electroplated surface, produced or producible by a method according to any of Claims 10 to 15.

17. Article comprising a layer producible by electroplating and, bordering this layer, a polymer layer, wherein the polymer layer, in the region of the interface to the layer producible by electroplating, comprises metal pigments as defined in any of Claims 1, 4 or 5.

## Revendications

1. Utilisation de pigments métalliques dans une formulation polymère liquide servant à améliorer l'aptitude à la galvanisation de la surface de la formulation polymère après son durcissement, dans laquelle les pigments métalliques comprennent un revêtement, qui entraîne un flottement des pigments métalliques dans la formulation polymère liquide et/ou dans la formulation polymère pendant le durcissement.

2. Utilisation selon la revendication 1, dans laquelle le flottement est entraîné par une tension interfaciale du revêtement des pigments métalliques par rapport à la quantité totale des autres constituants de la formulation polymère liquide et/ou du liant contenu dans la formulation polymère, qui empêche une humidification complète des pigments métalliques revêtus.

3. Utilisation selon la revendication 1 ou 2, dans laquelle le revêtement des pigments métalliques comprend un composé choisi parmi le groupe constitué d'acides gras en C₁₀-C₂₄ ou d'un desdits composés ou d'un mélange composé de plus d'un desdits composés.

4. Utilisation selon l'une quelconque des revendications 1 à 3, dans laquelle les pigments métalliques sont sphériques, en forme d'aiguille, en forme de plaquette et/ou une agrégation composée d'une pluralité de pigments de ce type.

5. Utilisation selon l'une quelconque des revendications précédentes, dans laquelle les pigments métalliques comprennent outre le revêtement un métal choisi parmi le groupe constitué de Mg, Ti, V, Cr, Mo, Fe, Co, Ni, Pd, Pt, Cu, Al, Zn, Sn, Bi, Au, Ag et de leurs alliages, ou sont constitués d'un desdits métaux.

6. Utilisation selon l'une quelconque des revendications précédentes, dans laquelle la formulation polymère est un vernis.

7. Utilisation selon l'une quelconque des revendications précédentes, dans laquelle la formulation polymère est à base d'un système monomère choisi parmi le groupe constitué d'uréthanes, d'époxydes et de (méth)acrylates ou est une formulation à base de résine alkyde.

8. Formulation polymère liquide pour une utilisation selon l'une quelconque des revendications 1 à 7 servant à améliorer l'aptitude à la galvanisation de la surface de la formulation polymère après son durcissement, comprenant une formulation polymère avec des pigments métalliques, tels que définis dans l'une quelconque des revendications 1 à 6, dans laquelle les pigments métalliques sont sphériques, en forme d'aiguille et/ou une agrégation desdites formes et les pigments métalliques comprennent un revêtement, qui entraîne un flottement des pigments métalliques dans la formulation polymère liquide et/ou dans la formulation polymère pendant le durcissement, dans laquelle le revêtement des pigments métalliques comprend un composé choisi parmi le groupe constitué d'acides gras en C₁₀ - C₂₄ ou d'un desdits composés ou d'un mélange composé de plus d'un desdits composés.

9. Formulation polymère liquide selon la revendication 8, dans laquelle le pigment métallique est contenu jusqu'à 0,1 à 50 % en poids, de manière préférée de 1 à 45 % en poids, de manière davantage préférée de 5 à 40 % en poids respectivement par rapport à la masse totale de la formulation polymère.

10. Procédé servant à la galvanisation d'une surface polymère, comprenant les étapes suivantes :
a) fourniture d'une formulation polymère liquide telle que définie dans l'une quelconque des revendications 8 ou 9,
b) durcissement de la formulation polymère dans des conditions qui entraînent un enrichissement du pigment métallique au niveau du côté orienté vers l'atmosphère, et
c) galvanisation du côté orienté vers l'atmosphère de la formulation polymère durcie.

11. Procédé selon la revendication 10, dans lequel le côté dirigé vers l'atmosphère de la formulation de polymère durcie est traité aux fins du dégagement de pigments métalliques après l'étape b) et avant l'étape c).

12. Procédé selon la revendication 10 ou 11, dans lequel des pigments métalliques sont retirés au niveau du côté orienté vers l'atmosphère de la formulation polymère durcie avant l'étape c).

13. Procédé selon l'une quelconque des revendications 10 à 12, dans lequel après le retrait des pigments métalliques, une inoculation avec des germes de métaux nobles, de préférence avec du palladium a lieu.

14. Procédé selon l'une quelconque des revendications 10 à 12, dans lequel la formulation polymère est choisie de telle sorte qu'elle est conductrice de courant après le durcissement.

15. Procédé selon l'une quelconque des revendications 10 à 12, dans lequel la concentration des pigments métalliques et le procédé de durcissement pour la formulation polymère sont choisis de telle sorte que la concentration en surface des pigments métalliques dépasse le seuil de percolation dans la zone de la face orientée vers l'atmosphère.

16. Objet avec une surface au moins en partie galvanisée, fabriqué ou pouvant être fabriqué selon un procédé selon l'une quelconque des revendications 10 à 15.

17. Objet comprenant une couche pouvant être fabriquée par galvanisation et, de manière adjacente à ladite couche, une couche polymère, dans lequel la couche polymère comprend des pigments métalliques, tels que définis dans l'une quelconque des revendications 1, 4 ou 5 dans la zone de la face limite par rapport à la couche pouvant être fabriquée par galvanisation.
